# EUROPEAN PATENT SPECIFICATION

(11) **EP 1 288 069 B1**
(45) Date of publication and mention of the grant of the patent: **16.12.2009**
(21) Application number: 02018926.2
(22) Date of filing: 23.08.2002
(51) Int. Cl.: B60Q 1/12

(54) **Vehicle headlight**
Fahrzeugscheinwerfer
Phare de véhicule

(30) Priority: 24.08.2001 JP 2001254681
(43) Date of publication of application: 05.03.2003
(73) Proprietor: Stanley Electric Co., Ltd., Meguro-ku Tokyo 153-8636 (JP)
(72) Inventor: Taniuchi, Hitoshi, Tokyo 153-8636 (JP); Nagano, Kouichi, Tokyo 153-8636 (JP)
(74) Representative: Wagner, Karl H.

(56) References cited:
- EP-A- 1 213 532
- DE-A1- 4 418 135
- DE-A1- 19 817 594
- US-A- 5 412 543
- US-A- 5 426 571
- US-A1- 2002 093 827
- PATENT ABSTRACTS OF JAPAN vol. 2000, no. 10, 17 November 2000 (2000-11-17) -& JP 2000 195325 A (STANLEY ELECTRIC CO LTD), 14 July 2000 (2000-07-14)
- PATENT ABSTRACTS OF JAPAN vol. 2000, no. 16, 8 May 2001 (2001-05-08) -& JP 2001 023415 A (STANLEY ELECTRIC CO LTD), 26 January 2001 (2001-01-26)
- PATENT ABSTRACTS OF JAPAN vol. 017, no. 370 (M-1444), 13 July 1993 (1993-07-13) & JP 05 058363 A (YAMAHA MOTOR CO LTD), 9 March 1993 (1993-03-09)

## Description

### BACKGROUND OF THE INVENTION

### 1. Field of the Invention

The present invention relates to a vehicle headlight, and more particularly, relates to a vehicle headlight adapted to be used in vehicles such as two-wheeled vehicles and some three-wheeled vehicles which can lean to one side at the time of turning around, *i.e.,* going around a curve, moving circularly, or the like.

### 2. Description of the Related Art

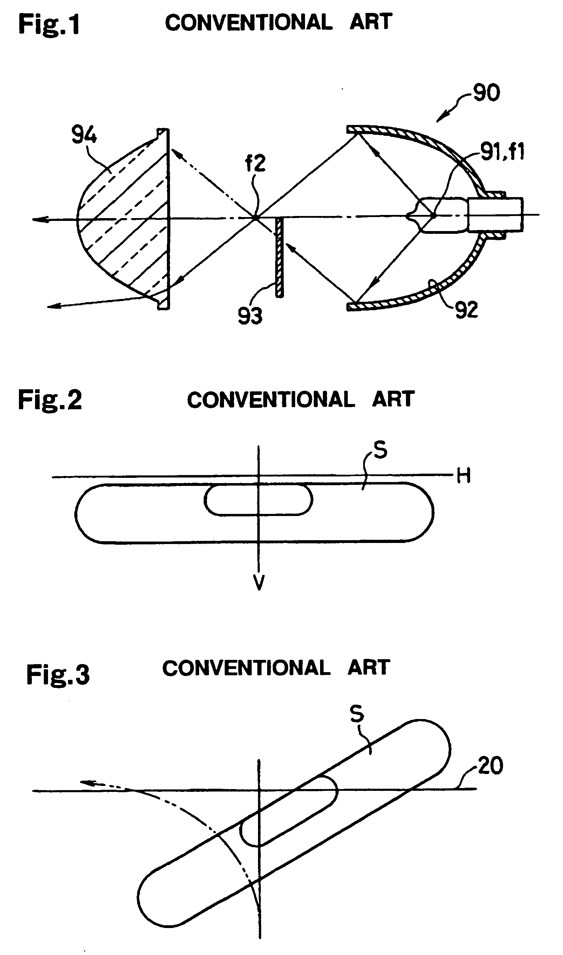

Fig. 1 shows a projection-type headlight 90 as an exemplified configuration of the conventional headlight. The headlight 90 includes a light source 91, an ellipse group reflecting surface 92 such as a rotated elliptic surface having a first focus f1 located at the light source 91, a shutter 93 arranged in the vicinity of a second focus f2 of the reflecting surface 92, and a projection lens 94.

The shutter 93 is provided in a luminous flux, which has a generally circular shape in its cross section and converges from the reflecting surface 92 to the second focus f2. The shutter 93 is able to block a lower half part of the luminous flux in a section to obtain the reflecting light in the shape of a generally upper chord semicircle in cross section. The luminous flux traveling from the reflecting surface 92 is flipped vertically and horizontally after having converged to the second focus f2, so that the semicircular upper chord part of the reflecting light can be projected as a semicircular lower chord part thereof through the projection lens 94 in the illumination direction. Consequently, the light illuminated from the headlight 90 becomes one that does not include light rays traveling upward, resulting in a passing-by mode light distribution pattern (i.e., a low beam) S which is substantially rectangularly elongated in a horizontal direction as shown in Fig. 2.

A two-wheeled vehicle leans to the left side at the time of going around a left curve. Simultaneously, as shown in Fig. 3, the low beam distribution pattern S leans to the left downside with respect to a horizontal axis 20 on a screen because the headlight 90 is fixed on the vehicle body. In other words, there is a problem in which the headlight cannot sufficiently illuminate the left forward area ahead of the vehicle in the traveling direction. Similarly, such a problem may be caused in a three-wheeled vehicle or the like in which a driver's seat leans to one side at the time of going around a curve.

For solving the above problem, there is proposed a method for always preventing the low beam distribution pattern S from being leaned to one side with respect to the surface of earth by having an entire set of the headlight 90 turned around its center axis. However, the turning movement of the two-wheeled vehicle varies depending on its driving conditions. For example, when the two-wheeled vehicle runs at a comparatively high speed, it is able to turn around as the vehicle body leans to one side without substantially using a handle bar. On the other hand, when it runs at a low speed, the handle bar must be used for steering to the desired side to turn around. In the great majority of actual driving cases, the vehicle turns while running at a high speed. Therefore, the turning of headlight in synchronization with the handle operation is not necessarily required for satisfying all of the conditions for the turning of the vehicle. In fact, it cannot be a drastic measure to improve the problem.

EP-A-1 213 532 forms part of the prior art under Art. 54 (3) EPC and discloses a vehicle light comprising a light source, a major reflecting surface reflecting light rays from the light source to the forward, a projection lens for converging light rays incident thereto by a predetermined degree, a shutter located in an optical path from the light source to the projection lens for cutting off an unnecessary portion of light rays on formation of a light distribution pattern, comprising: a first movable reflecting surface of an ellipse group reflecting surface having a first focus approximately on the light source and a second focus at a predetermined position, capable of being inserted in or removed from an optical path from the light source to a second fixed reflecting surface by rotational movement around its longitudinal axis; a first fixed reflecting surface of a parabolic group reflecting surface which has a concave surface when viewed in a direction facing to the forward of the vehicle light, having a focus approximately on the second focus of the first reflecting surface for reflecting light rays from the first reflecting surface to a predetermined front area of the vehicle light, comprising at least two second reflecting surface elements; and a second fixed reflecting surface having a first focus approximately on the light source comprising at least two third reflecting surface elements for reflecting light rays into a predetermined forward direction to be incident to the projection lens, which light rays have traveled its corresponding optical path from the light source thereto without being reflected by the first movable reflecting surface.

DE 44 18 135 A1 discloses a car headlamp having a main reflector which sends out a general light distribution from the bulb and at least one additional reflector that can be moved in position and/or shape relative to the main one by means of a pair of adjusters. This is used to give an additional light distribution to the main one. The reflectors are all made in a single unit, the connections being flexible. Thus the overall light beam can be shaped to suit the traffic or weather conditions. The additional reflector may be around the edge of the main one, or form the central portion near the apex.

JP 2000 195325 A discloses a device which comprises a first reflective surface with a light source placed at the focal point, light guide passages provided through the rear side of the first reflective surface, a second reflecting surface with the light guide passages placed at the focal points, and a third reflecting surface with the light source and the light guide passages respectively placed at the first focal point and the second focal points. The relative positions of the second reflecting surface, the third reflecting surface, and the light source are fixed. The first reflecting surface is shaft, clamped slidably back and forth relative to the light source. A drive part is provided on the first reflective surface. A head light for automobile provided with this constitution can switch light distributions without shielding plate or the like.

Finally, US-A-4 426 571 discloses a device which determines the direction and amount of tilt, lean, bank, or attitude of a vehicle relative to the road surface by means of one or more sensors which measure the return time of emitted energy reflected from the road surface. Vehicle attitude information is used to move, correct, adjust, or otherwise alter preselected vehicle parts or functions according to a predetermined combination of computer paradigms and mechanical linkages. This process can be used to adjust the headlight beam orientation in order to better illuminate the forward path of the vehicle. The headlight beam may be further adjusted according to information on vehicle speed and changes thereof. The motorcycle headlight aiming device may be used to aim a camera which is mounted to a banking vehicle. Bank angle data may also be used to switch off a turn signal mechanism, and to limit engine power at extreme angles of bank. Engine power may also be limited when sensor data indicates front wheel lift-off.

### SUMMARY OF THE INVENTION

For solving the above problem, an object of the present invention is to provide a vehicle headlight capable of obtaining a desired light distribution pattern in a desired direction for a two-wheel vehicle or the like having a vehicle body which leans to one side at the time of turning around. In addition, another object of the present invention is to provide a vehicle headlight capable of always keeping a horizontal line of the desired light distribution pattern in parallel to the surface of earth.

According to the present invention, as concrete means for solving the above problem of the prior art, there is provided a vehicle headlight mounted on a vehicle body having the features of claim 1. Preferably, a fixing member is arranged such that the movable part of the first ellipse group reflecting surface is interposed between the fixing member and the second ellipse group reflecting surface, the fixing member retaining the movable part of the first ellipse group reflecting surface in place. In this constitution, a shape of light distribution formed by light rays from the projection lens is substantially a rectangle having a long side extending in a horizontal direction, and the movable part of the first' ellipse group reflecting surface turns around by actuating the drive unit such that the long side of the shape of the light distribution is kept in a horizontal position with respect to a surface of earth. Furthermore, light rays passed through the opening part of the first ellipse group reflecting surface are reflected from at least a part of the second ellipse group reflecting surface, followed by converging to a point in a predetermined direction to illuminate an area ahead of the vehicle body.

Conventionally, as described above, the vehicle headlight leans to one side when the vehicle turns about a corner or in a circle, so that a light distribution pattern also leans to the same side. The present invention solves such a problem by providing the configuration of the vehicle headlight in which a generally rectangular light distribution pattern is always in parallel with the surface of earth (i.e., the surface of the road) by turning the movable part. In addition, there is preferably provided an integrally shutter part which works together with the movable part, so that it is possible to obtain a desired light distribution pattern in a desired direction. Furthermore, using the relative movements of the opening of the first ellipse group reflecting surface and the position of the second ellipse group reflecting surface, the luminous flux can be biased in the turning direction for further improving the visibility. Therefore, such a configuration of the vehicle headlight produces an excellent effect on a performance improvement of such a kind of the vehicle lamp.

In the vehicle headlight according to the invention, the movable part and the shutter part of the first ellipse group reflecting surface be integrally formed.

In the vehicle headlight according to the invention, the light rays passing through the opening part and reflected from the second ellipse group reflecting surface can illuminate a forward area in a traveling direction when the vehicle body leans to one side.

In the vehicle headlight according to the invention, a second focus of the second ellipse group reflecting surface may be preferably located in the vicinity of a focus of the projection lens.

In the vehicle headlight according to the invention, preferably the first ellipse group reflecting surface to has a fixed part, and a portion of the second ellipse group reflecting surface for covering the opening part may be connected with the fixed part of the first ellipse group reflecting surface through a stepped portion.

In the vehicle headlight according to the invention, the first ellipse group reflecting surface may have a fixed part behind the movable part, and it is preferable that the fixed part and the movable part of the first ellipse group reflecting surface can function as a continuous surface.

In the vehicle headlight according to the invention, the first ellipse group reflecting surface may be preferably located inside the second ellipse group reflecting surface.

In the vehicle headlight according to the invention, turning of the first ellipse group reflecting surface is performed by the drive unit based on an output of a sensor for detecting an inclination of the vehicle body, an output of a sensor for detecting a running speed of the vehicle body, and/or an output of a sensor for detecting a steering angle of a steering wheel or a handle bar.

In the vehicle headlight according to the invention, it is preferred that the drive unit comprise a motor and a gear mechanism.

### BRIEF DESCRIPTION OF THE DRAWINGS

These and other objects and advantages of the present invention will become clear from the following description with reference to the accompanying drawings, wherein:
Fig. 1 is a cross sectional view illustrating a typical configuration of a conventional headlight;
Fig. 2 is an explanatory view showing light distribution characteristics of the conventional vehicle headlight;
Fig. 3 is an explanatory view showing light distribution characteristics of the conventional vehicle lighting equipment, when the vehicle body leans to one side;
Fig. 4 is a cross sectional view illustrating the configuration of a vehicle headlight according to a first embodiment of the present invention;
Fig. 5 is a perspective exploded view of the vehicle headlight according to the first embodiment of the present invention;
Fig. 6 is a perspective view showing a modified example of the shape of an opening part in the vehicle headlight of the present invention;

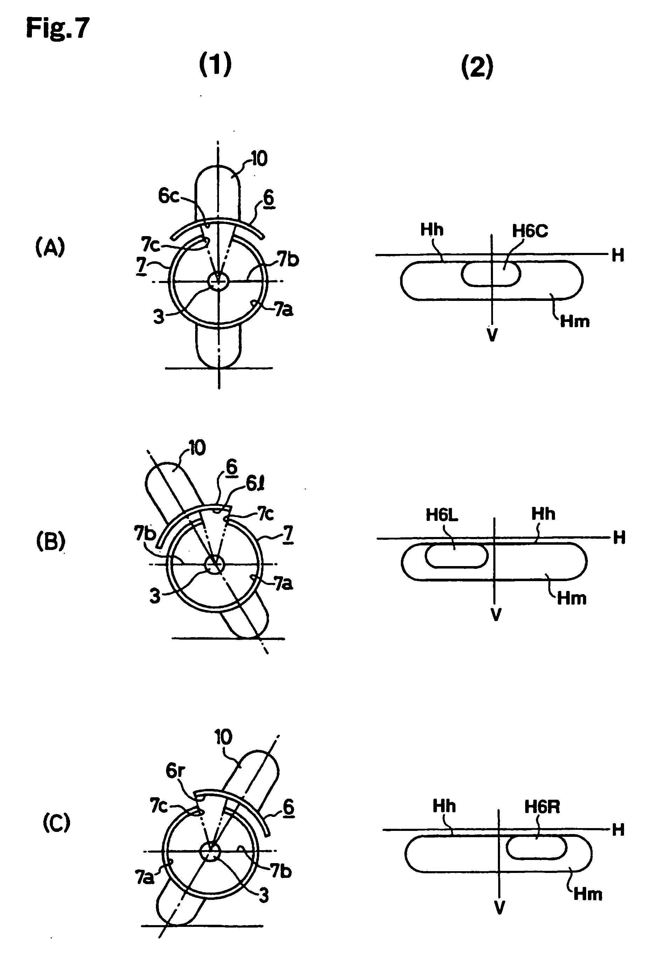

Fig. 7 includes views illustrating the vehicle headlight according to the first embodiment of the present invention, where (1) includes different explanatory drawings that illustrate the positional relationships between the first ellipse group reflecting surface and the second ellipse group reflecting surface on the basis of the inclinations of the vehicle body, respectively, and (2) includes different explanatory drawings that correspond to the respective drawings of (1) in which each of the drawings indicates light distribution characteristics obtained from reflecting light from the second ellipse group reflecting surface and those obtained from the entire vehicle headlight;
Fig. 8(a) is a vertical cross sectional view along the optical axis Z of a vehicle headlight according to a second embodiment of the present invention, while Fig. 8(b) is a horizontal cross sectional view thereof;
Fig. 9 is a perspective exploded view of the vehicle headlight according to the second embodiment of the present invention;
Fig. 10 is a perspective view of a modified example of a movable part equipped in the vehicle headlight according to the second embodiment of the present invention; and

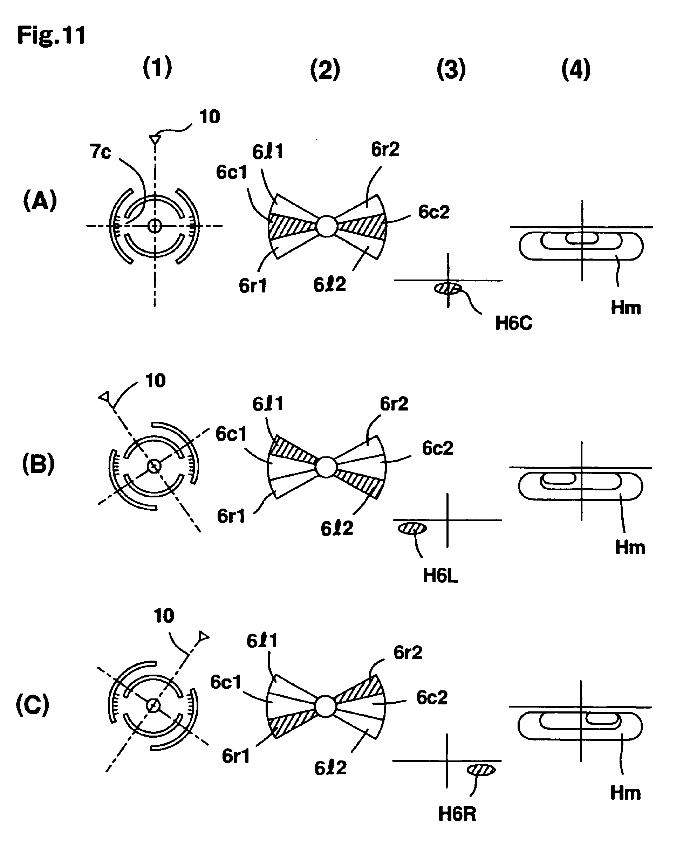

Fig. 11 includes views for illustrating the vehicle headlight according to the second embodiment of the present invention, where (1) includes different explanatory drawings that illustrate the positional relationships between the first ellipse group reflecting surface and the second ellipse group reflecting surface on the basis of the inclinations of the vehicle body, respectively, and (2) includes different explanatory drawings that correspond to the respective drawings of (2) in which each of the drawings represents a reflecting area of the second ellipse group reflecting surface, (3) indicates light distribution patterns obtained from reflecting light from the second ellipse group reflecting surface, and (4) indicates light distribution characteristics from the entire vehicle headlight.
Fig. 12(A) illustrates a block diagram of control circuits for driving a motor of the vehicle headlight according to the first preferred embodiment of the present invention.
Fig. 12(B) illustrates a perspective view showing a movable part of the vehicle headlight to which a potentiometer is attached, according to the first preferred embodiment of the present invention.

### DETAILED DESCRIPTION OF THE PREFERRED EMBODIMENTS

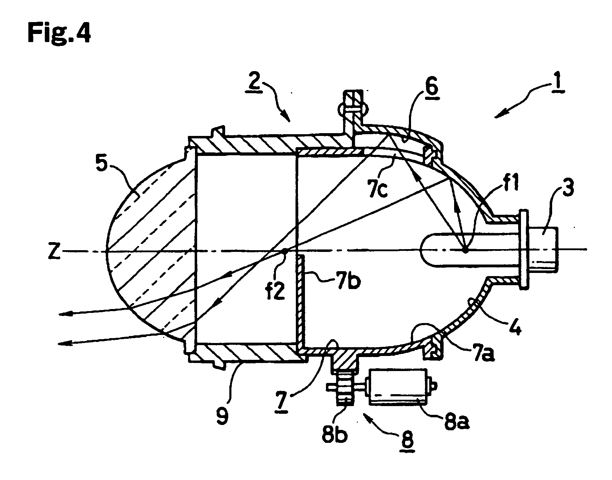

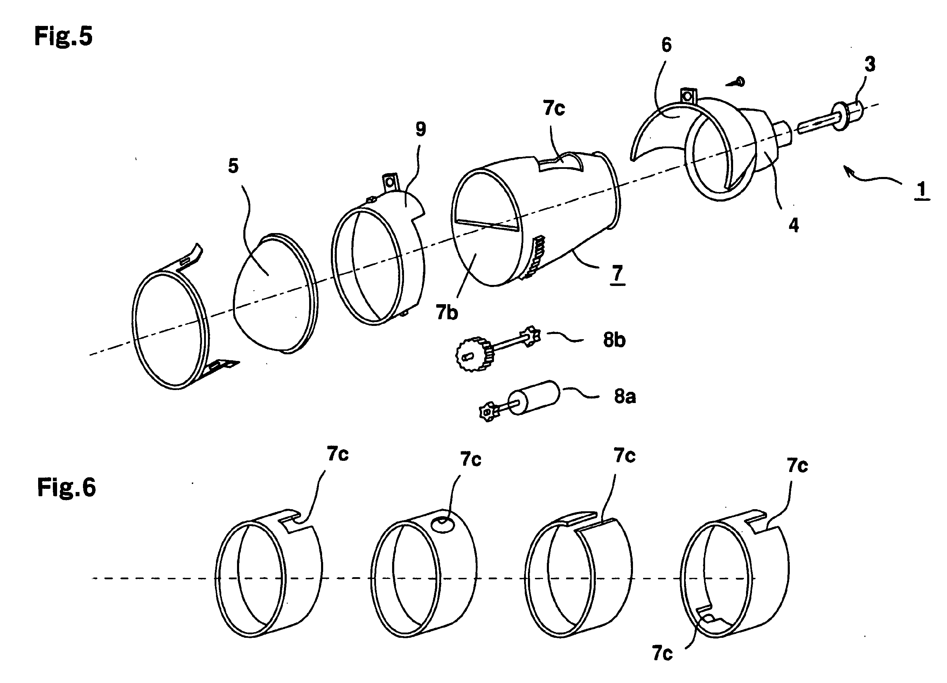

Hereinafter, embodiments of the present invention will be described in detail with reference to the attached drawings. In Figs. 4 and 5, the reference numeral 1 denotes a vehicle headlight according to a first embodiment of the present invention.

The vehicle headlight 1 includes a light source 3, a projection lens 5, a fixed reflecting surface part 4, a fixing part 2, and a movable part 7. The fixed reflecting surface part 4 functions as a part of a first ellipse group reflecting surface (i.e., an ellipse group reflecting surface such as a rotated elliptic surface). The fixed reflecting surface part 4 includes a first focus f1 and a second focus f2. The light source 3 is arranged on the first focus f1, while a focus of the projection lens 5 is arranged in the vicinity of the second focus f2. The fixing part 2 is made up of a second ellipse group reflecting surface 6 and a fixing member 9. The second ellipse group reflecting surface 6 has a first focus f1 and a second focus f2. The light source 3 is arranged on the first focus, while the second focus of the second ellipse group reflecting surface 6 is arranged in the vicinity of the focus f2 of the projection lens 5 . The vehicle headlight 1 is basically a projector-type headlight. The fixing member 9 fits on the second ellipse group reflecting surface 6 to make up the fixing part 2. The fixing member 9 has a function of simultaneously holding the movable part 7 together with the fixed reflecting surface part 4 of the first ellipse group reflecting surface so as to be rotatable about an axis, i.e., the center line Z of the vehicle headlight 1. It is preferred that the fixed reflecting surface part 4 of the first ellipse group reflecting surface and the second ellipse group reflecting surface 6 be connected with each other by providing a stepped portion for surely holing the movable part 7 in place. A protruded portion is provided on the movable part 7, while a groove is peripherally formed in the fixed reflecting surface part 4, allowing that the fixing part 2 and the movable part 7 can be fitted to each other in a reliable manner. In the vehicle headlight 1 shown in Fig. 4, the fixing member 9 also has a function of holding the projection lens 5 in place. According to the present invention, however, it is not necessary that the fixing member 9 always has both the function of holding the movable part 7 in place and the function of holding the projection lens 5 in place. For instance, a member for holding the movable part 7 in place and a member for holding the projection lens in place may be connected with each other at a boundary between them.

The movable part 7 includes a movable reflecting surface part 7a that constitutes a part of the first ellipse group reflecting surface, a shutter part 7b for forming a desired light distribution pattern (for low beam), and an opening part 7c formed by cutting a part of the movable reflecting surface part 7a. The movable part 7 is attached on the fixing part 2 such that it can be rotated around the center line Z of the vehicle headlight 1. If the vehicle headlight 1 is used for an illumination of high beam, the shutter part 7b may be omitted. In addition, the second ellipse-group reflecting surface 6 can be positioned on the outside of the fixed reflecting surface part 4 of the first ellipse group reflecting surface and is provided on a region that covers a moving range of the opening part 7c formed on the movable first ellipse group reflecting surface. In addition, the opening part 7c may be shaped as desired, for example as shown in Fig. 6.

Here, the fixed reflecting surface part 4 and the movable reflecting surface part 7a of the first ellipse group reflecting surface are formed by cutting one ellipse group reflecting surface, which is formed so as to have dimensions sufficiently satisfying the requirements in the vehicle headlight 1, in a plane perpendicular to the center line Z. Therefore, in a state in which the fixed reflecting surface part 4 and the movable reflecting surface part 7a are combined together, such a combination acts on the light source 3 just as in the case with a single ellipse group reflecting surface, except for the opening part 7c. Throughout the present invention, the term "ellipse group reflecting surface" can be defined as a curve surface having an ellipse or a similar shape thereto as a whole, such as a rotated elliptic surface, a complex elliptic surface, an ellipsoidal surface, an elliptic cylindrical surface, an elliptical free-curved surface, or combination thereof. If a light source is located on a first focus of the ellipse group reflecting surface, light rays emitted from the light source converge to a second focus of the ellipse group reflecting surface.

Then, the shutter part 7b and the second focus f2 of the first ellipse group reflecting surface formed by the combination of the fixed reflecting surface part 4 and the movable reflecting surface part 7a are provided such that they can be located in the vicinity of the focus of the projection lens 5. In addition, the above combination of the movable reflecting surface part 7a and the fixed reflecting surface part 4 of the first ellipse group reflecting surface is set to an initial position. When the vehicle headlight 1 is attached on the vehicle body 10 and the body does not lean (see (1) of Fig. 7(A)), the initial position allows the shutter part 7b to block off a portion of the reflected light from the first ellipse group reflecting surface formed by the movable reflecting surface part 7a and the fixed reflecting surface part 4 to provide the horizontal bright-dark boundary Hh of light with respect to the road surface (see Fig. 7(A)(2)). In this embodiment, furthermore, the upper end portion of the shutter part 7b extends straight. Alternatively, in fact, it may be shaped into one of other various forms so as to match the desired light distribution pattern. For example, if the vehicle headlight 1 is used as a lighting equipment for a four-wheeled vehicle to be driven on the left-hand side, the right half of the upper end portion of the shutter part 7b may be provided as one side inclined downward at 15 degrees from the center of the upper end portion to the lower right direction so that the light distribution pattern includes an upper left portion inclined upward at 15 degrees in a state of viewing from the driver seat.

The opening part 7c is formed in the movable part 7. In the first embodiment of the present invention, the opening part 7c is located at a position above the reflecting surface part 7a located at the initial position described above. On the other hand, the second ellipse group reflecting surface 6 is provided on the fixing part 2 corresponding to the opening part 7c such that it generates reflecting light in a predetermined direction on the basis of the inclination of the vehicle body 10 as will be described later.

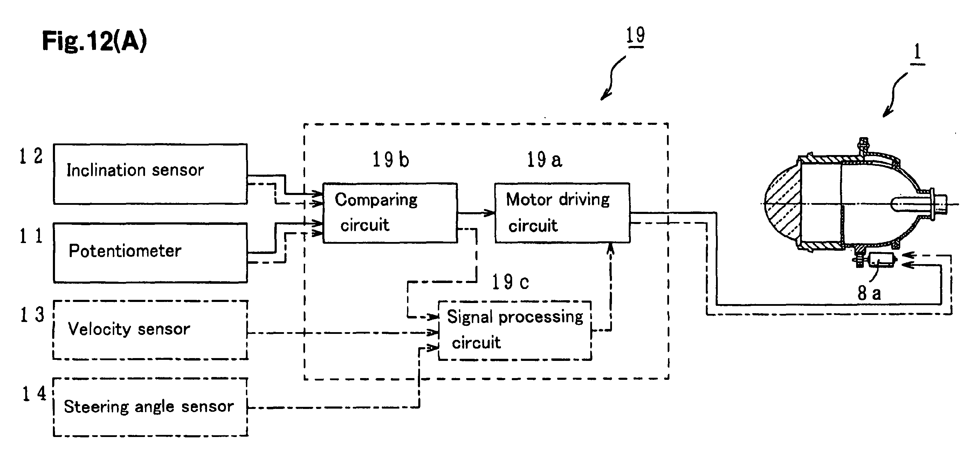

The movable part 7 includes a drive unit 8 including a motor 8a and a gear mechanism 8b which can be actuated according to signals from, for example, an inclination sensor (See Fig. 12(A)) for detecting an inclination of the vehicle body. If the vehicle body 10 leans to one side, the movable part 7 can be rotated about the center line Z of the vehicle headlight 1.

Fig. 7(1) schematically illustrates the movement of the movable part 7 responding to the inclination of the vehicle body 10. Fig. 7(A)(1) shows their geometrical conditions when the vehicle body 10 goes straight. At this time, the vehicle body 10 is not inclined, so that the movable part 7 is in a state of an initial position with respect to the fixing part 2. At this time, on the other hand, the opening part 7c is located on the center part 6c of the second ellipse group reflecting surface 6. Furthermore, in Fig. 7(A)(1) to Fig. 7(C) (1), the vehicle body 10, the movable part 7, the second ellipse group reflecting surface 6, and so on are represented as viewed from the driver seat.

In the present invention, when the vehicle goes straight, the vehicle headlight 1 may only illuminate brightly the forward area ahead of the vehicle in the traveling direction. The middle portion 6c of the second ellipse group reflecting surface 6 is configured such that the light source 3 is arranged on the position corresponding to the first focus of the middle portion 6c. The middle portion 6c may be formed as a rotated elliptic surface or the like where the second focus can be located in the vicinity of the second focus f2 of the fixed reflecting surface part 4. The reflecting light from the middle portion 6c illuminates the forward area ahead of the vehicle body 10 with the horizontal bright-dark boundary Hh of light as indicated as an auxiliary light distribution H6C in Fig. 7(A)(2), as is the case with the main light distribution Hm which is substantially rectangular and long in the horizontal direction, and is formed by the fixed reflecting surface part 4 of the first ellipse group reflecting surface and the reflecting surface part 7a and the shutter part 7b of the movable reflecting surface part 7.

Fig. 7(B)(1) shows that the vehicle body 10 turns to the left side. In this case, the vehicle body 10 leans to the left side in the traveling direction. Therefore, if the vehicle body 10 leans to one side, for example, the inclination of the vehicle can be detected by an inclination sensor (see Fig. 12(A)) attached on the vehicle body, followed by actuating the drive unit 8 to turn the movable part 7 with respect to the fixing part 2. For instance, at the time of turning to the left side, the movable part 7 turns clockwise in the traveling direction, allowing the shutter part 7b to be located at a position where the horizontal bright-dark boundary Hh of light can be formed. Therefore, the main light distribution Hm formed by the fixed reflecting surface part 4 of the first ellipse group reflecting surface, and the movable reflecting surface part 7a and the shutter part 7b of the first ellipse group reflecting surface can be the same as one obtained at the time when the vehicle body goes straight as described above even when the vehicle body 10 leans to one side.

Here, considering the positional relationship between the opening part 7c and the second ellipse group reflecting surface 6, the fixing part 2 inclines as the vehicle body 10 leans to one side. The movable part 7 keeps its upright position through the actuation of the drive unit 8. Thus, the auxiliary or second ellipse group reflecting surface 6 can be shifted with reference to the opening part 7c.

In the present invention, the light passing through the opening part 7c when the vehicle body 10 leans to the left side reaches a left corresponding portion 61 of the second ellipse group reflecting surface 6. The reflected light from the left corresponding portion 61 can be illuminated intensively on a predetermined area, i.e., the left forward area ahead of the vehicle in the traveling direction. Therefore, the auxiliary light distribution H6L from the left corresponding portion 61 can be positioned on the left side with respect to the vertical center line V of the main light distribution Hm as shown in Fig. 7(B)(2). That is, the forward area ahead of the vehicle body 10 in the traveling direction can be illuminated brightly.

Fig. 7(C)(1) indicates a state of the vehicle body 10 in which it turns to the right side. In case the vehicle body 10 leans to the right side, by the same action as the one described above the light passing through the opening part 7c reaches a right corresponding portion 6r of the second ellipse group reflecting surface 6. The reflected light from the right corresponding portion 6r can be illuminated intensively on a predetermined area, i.e., the right forward area ahead of the vehicle in the traveling direction. Therefore, as shown in Fig. 7(C)(2), the auxiliary light distribution H6R from the right corresponding portion 6r brightly illuminates the predetermined light area on the right side with respect to the vertical center line V of the main light distribution Hm.

Furthermore, the middle portion 6c, the left corresponding portion 61, and the right corresponding portion 6r of the second ellipse group reflecting surface 6 may be formed as a single ellipse group reflecting surface, or alternatively they may be formed as a combination of a plurality of different ellipse group reflecting surfaces. Also, it is preferable that the illumination area formed by the reflected light from the second ellipse group reflecting surface 6 is gradually moved in conjunction with the movement of the movable part 7. Therefore, each structural element of the second ellipse group reflecting surface 6 is not limited to three components, i.e., the middle portion 6c, the left corresponding portion 61, and the right corresponding portion 6r. It can be constructed of an appropriate number of components or as a part of a continuous surface. If a plurality of the ellipse group reflecting surfaces are combined together, the boundary portion of each structural component of the second ellipse group reflecting surface 6 is preferably continous such that it is difficult to be recognized in the appearance.

According to the vehicle headlight 1 of the present invention, even though the vehicle is a two-wheeled type or the like where the vehicle body 10 leans to one side at the time of turning around, the light distribution can be always kept in parallel with the surface of the road. In this case, a cutoff line of the light distribution does not incline even though the inclination of the vehicle body 10 is increased. Therefore, in addition to the advantage of an increased visibility, the area ahead of the vehicle in the direction of turning, i.e., in the traveling direction can be illuminated brightly by changing the positional relationship between the opening part 7c of the movable reflecting surface 7 and the second ellipse group reflecting surface 6, so that the visibility in the traveling direction can be further improved.

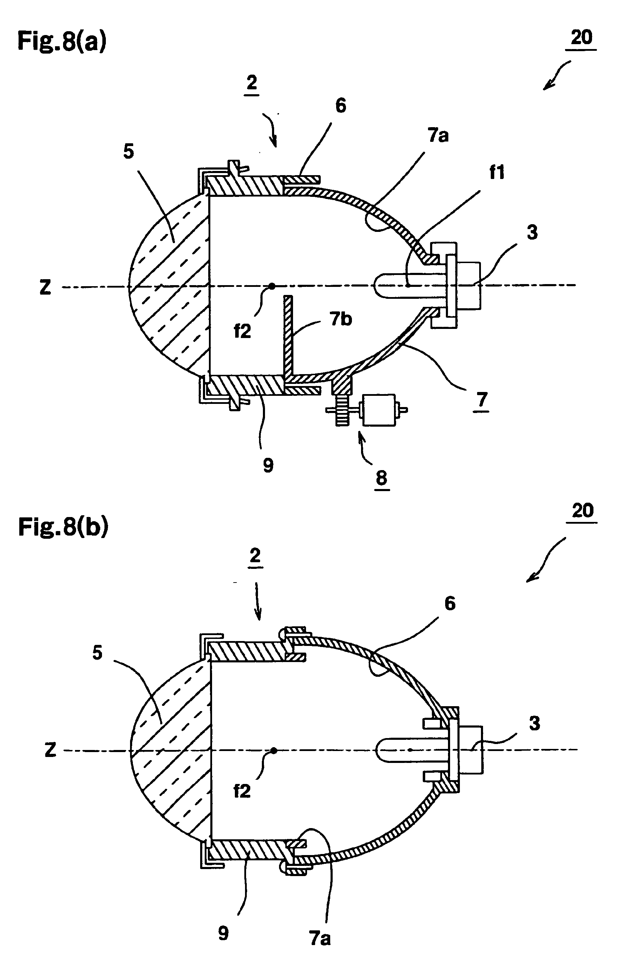

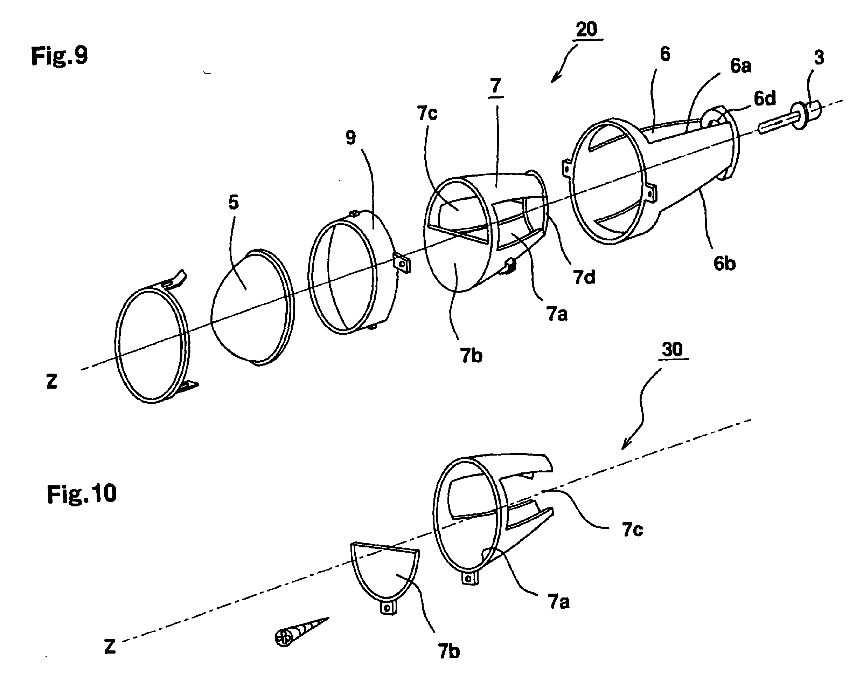

Figs. 8 and 9 show a vehicle headlight 20 according to a second embodiment of the present invention. The vehicle headlight 20 includes a light source 3, a projection lens 5, movable part or movable reflecting surface 7 forming a first ellipse group reflecting surface, a second ellipse group reflecting surface 6, a shutter part 7b, a drive unit 8, and a fixing member 9. The first ellipse group reflecting surface 7 includes a first focus f1 on which the light source 3 is arranged and a second focus f2 which is located in the vicinity of the focus of the projection lens 5. The first ellipse group reflecting surface constituted by the movable part 7 includes a movable reflecting surface part 7a. The second ellipse group reflecting surface 6 is located on the outside of the first ellipse group reflecting surface or movable part 7. The light source 3 is arranged on a first focus f1 of the second ellipse group reflecting surface 6, while a second focus f2 thereof is arranged in the vicinity of the focus of the projection lens 5. The shutter portion 7b is integrally formed with the movable reflecting surface part 7a of the first ellipse group reflecting surface 7. The drive unit 8 is connected with the first ellipse group reflecting surface or movable part 7 to drive it. Here, the explanations relating to the same structural components as those in the first embodiment will be omitted. It is noted that the vehicle headlight 20 of the second embodiment has an opening part 7c which is located on a position different from the one formed in the vehicle headlight 1 of the first embodiment (see Fig. 9). In this second embodiment, therefore, the configurations of the first ellipse group reflecting surface 7 and second ellipse group reflecting surfaces 6 are different from those of the first embodiment.

As shown in Fig. 9, in the second embodiment, the vehicle headlight 20 has a pair of opening parts 7c formed on both lateral sides of the first ellipse group reflecting surface 7. Also, the second ellipse group reflecting surface 6 is arranged so as to extend over the movable range of the opening parts 7c. Therefore, in other words, there is provided a pair of the second ellipse group reflecting surfaces 6 formed in the vehicle headlight 20 so as to correspond to the pair of the opening parts 7c. In addition, the first ellipse group reflecting surface does not include a fixed reflecting surface part 4. It is only constructed of the movable reflecting surface part 7a. In the vehicle headlight 20, the fixing part 2 includes the second ellipse group reflecting surfaces 6 and the fixing member 9.

The movable reflecting surface part 7a is integrally formed with the shutter part 7b and is able to rotate about the center line Z of the vehicle headlight 20 with reference to the fixing part 2 by actuating the drive unit 8.

The dimensions of the opening part 7c of the movable part 7 can be appropriately defined on the basis of both the illumination area and the distribution of illumination intensity which is required for the reflected light from the second ellipse group reflecting surface 6. In Fig. 9, there is shown an exploded view of the vehicle lamp 20 in which the opening part 7c is formed as a comparatively large opening except for a rim portion 7d. According to the present invention, however, the opening part 7c is not limited to such a form. Various forms will be allowed within the scope of the invention.

Furthermore, the second ellipse group reflecting surface 6 may be formed over the entire circumference. However, in view of weight saving, cost effectiveness, and so on, it is preferable provide it only on the required portion as shown in Fig. 9. In addition, the fixing member 9 holds the movable part 7 in place such that the movable part 7 is interposed between the fixing member 9 and the second ellipse group reflecting surface 6 while allowing the rotation of the movable part 7 around the center line Z of the headlight 20. The fixing member 9 is fixed on the peripheral portion of the second ellipse group reflecting surface 6 on the projection lens side by means of screws or the like in such a way so as to of press the rim portion 7d of the first ellipse group reflecting surface or the movable part 7 against the peripheral portion 6d of the second ellipse group reflecting surface 6 on the light source side.

Fig. 11 schematically illustrates the motion of the movable part 7 when the vehicle body 10 leans to one side. In this figure, the vehicle body 10 is only represented by the direction of its vertical axis. Fig. 11(A) shows that the vehicle body 10 goes straight. In this case, as shown in Fig. 11(A)(1), the vehicle body 10 is not inclined. Therefore, the movable part 7 is in a state in which it is located at an initial position. As shown in Fig. 11(A)(2), the opening parts 7c are located so as to face to the middle portions 6c1, 6c2 of the second ellipse group reflecting surface 6, respectively. It is to be noted that in Fig. 11 the movable part 7, the second ellipse group reflecting surface 6, and so on are represented as viewed from the drivers seat.

According to the present invention, in such a state in which the vehicle body 10 goes straight, the vehicle headlight 20 may be configured such that the area ahead of the vehicle body 10 in the traveling direction can be illuminated brightly. Thus, the middle portions 6c1, 6c2 of the second ellipse group reflecting surface 6 are formed as a rotated elliptic surface or the like having a first focus on which the light source 3 is arranged and a second focus located in the vicinity of the focus f2 of the projection lens 5. Therefore, the reflected light from each of the middle portions 6c1, 6c2 illuminates the front area ahead of the vehicle body 10 with the horizontal bright-dark boundary Hh of light indicated as an auxiliary light distribution H6C in Fig. 11(A)(3), as it is also the case with the main light distribution Hm formed by the movable reflecting surface part 7a and the shutter part 7b of the first ellipse group reflecting surface or movable part 7.

Fig. 11(B)(1) shows that the vehicle body 10 turns to the left side. In this case, the vehicle body 10 leans to the left side in the traveling direction. Therefore, the drive unit 8 is actuated to turn the movable part 7 with reference to the fixing part 2. For example, at the time of turning to the left side, the movable part 7 turns clockwise in the traveling direction, allowing the shutter part 7b to be located at a position where the horizontal bright-dark boundary Hh of light can be formed. Therefore, the main light distribution Hm formed by the movable reflecting surface part 7a and the shutter part 7b of the first ellipse group reflecting surface 7 can be the same as the one obtained at the time when the vehicle body 10 goes straight as described above even when the vehicle body 10 leans to one side.

Here, considering the positional relationship between the opening part 7c and the second ellipse group reflecting surface 6, the fixing part 2 inclines as the vehicle body 10 leans to one side. At this time, the movable part 7 keeps its upright position through the actuation of the drive unit 8. Thus, the opening part 7c faces to the upper left portion 611 and lower right portion 612 (which are referred to as left-corresponding portion or 61) of the second ellipse group reflecting surface 6.

In the present invention, the reflected light from the left-corresponding portion 611 and 612 of the second ellipse group reflecting surface 6 onto which the light passing through the opening part 7c impinges, at the time of leaning to the left side, can be illuminated intensively on the predetermined area, i.e., the left forward area ahead of the vehicle in the traveling direction. Therefore, the auxiliary light distribution H6L from the left-corresponding portion 61 can be positioned on the left side with respect to the vertical center line V of the main light distribution Hm as shown in Fig. 11(B)(3). That is, the forward area ahead of the vehicle body 10 in the traveling direction can be illuminated brightly.

Fig. 11 (C) (1) indicates a state of the vehicle body 10 turning to the right side. If the vehicle body 10 leans to the right side, due to the same action as the one described above, as shown in Fig. 11(c)(2), the light passing through the opening part 7c reaches each of right corresponding portions 6r1, 6r2 of the second ellipse group reflecting surface 6. Here, the right corresponding portion 6r1 is a lower left portion of the second ellipse group reflecting surface 6, while the right corresponding portion 6r2 is an upper right portion thereof. The reflected light from the right corresponding portions 6r1, 6r2 can be illuminated intensively on the predetermined area H6R, i.e., the right forward area ahead of the vehicle in the traveling direction. Therefore, as shown in Fig. 11(c)(3) and 11(c) (4), the auxiliary light distribution H6R from the right corresponding portion 6r can be positioned on the right side with respect to the vertical center line V of the main light distribution Hm, and thus, the forward and rightward area ahead of the vehicle body in the traveling direction can be brightly illuminated.

According to the vehicle headlight 20 of the present embodiment, even though the vehicle is a two-wheeled one or the like where the vehicle body 10 leans to one side at the time of turning around, the light distribution can be always kept in parallel with the surface of the road. In this case, a cutoff line of the light distribution does not incline even though the inclination of the vehicle body 10 is increased. Therefore, in addition to an advantage of an increase in visibility, the area ahead of the vehicle in the direction of turning, i.e., in the traveling direction can be illuminated brightly by changing the positional relationship between the opening part 7c of the movable part or the first ellipse group reflecting surface 7 and the second ellipse group reflecting surface 6, so that the visibility in the traveling direction can be further improved.

Furthermore, with reference to the area in which the second ellipse group reflecting surface 6 is formed, it may be formed such that it covers the movable range of the opening part 7c. It is preferable that the second ellipse group reflecting surface 6 is formed on an appropriate area which is wider than the movable range of the opening part 7c for surely capturing the light passing through the opening part 7c onto the second ellipse group reflecting surface 6 even though the relative moving distance of the movable part 7 with respect to the fixing part 2 is large.

Furthermore, as shown in Fig. 9, the upper edge 6a and the lower edge 6b of the second ellipse group reflecting surface 6 may be adjusted on the basis of the light distribution characteristics required for the reflected light from the second ellipse group reflecting surface 6 and may be defined in consideration of the length and width in the direction of the optical axis Z of the second ellipse group reflecting surface 6, the state of the inclination of the vehicle on which the headlight is to be mounted (for example, angle), and so on.

Fig. 10 illustrates a modified example of the movable part 7 of the vehicle headlight 20 in accordance with the second embodiment of the present invention. If a larger opening part 7c is formed in the movable part 7, as shown in Fig. 10, the rim portion 7d which is to be pressed against the peripheral portion 6d of the second ellipse group reflecting surface on the side of the light source may be modified to prevent it from being deformed by impact or the like. If there is no fear of deformation or the like, as shown in Fig. 10, the rim portion 7d may be omitted. Furthermore, the shutter part 7b and the movable reflecting surface part 7a may be integrally formed, or alternatively they may be separately formed and then fixed together with screws or the like.

For actual operation of a vehicle, such as a two-wheeled vehicle, it can be turned around using its handle bars at the time of traveling at a low speed while the inclination of the vehicle body 10 can be negligible. On the other hand, when the vehicle runs at a high speed, the vehicle can be hardly turned around using its handle bars, so that for example the driver may incline the vehicle body 10 to one side to turn around. The degree of inclination of the vehicle body 10 can almost depend on the traveling speed of the vehicle. In the present invention, therefore, it is preferable to use output signals to be obtained from a steering angle sensor of the handle bar, a sensor for detecting the traveling speed of the vehicle, and so on in addition to the output of the inclination sensors described above as signals to be entered into the drive unit 8.

Fig. 12 (A) illustrates a block diagram showing a control circuit 19 of the motor 8a. In Fig. 12 (A), a route is indicated by solid lines showing a case in which the conditions to be referenced for driving the motor 8a consist of an output from an inclination sensor 12 for detecting an inclination of the vehicle body 10, and a route is indicated by dash-dot-lines showing a case in which the conditions to be referenced include an output from a velocity sensor 13 for detecting a running speed of the vehicle body 10, and an output of a steering angle sensor 14 for detecting a steering angle of a handle bar or a steering wheel of the vehicle body 10.

First, the structure of the control circuit 19 for the case in which the conditions to be referenced for driving the motor 8a consist of the output from the inclination sensor 12 will now be described (solid line route).

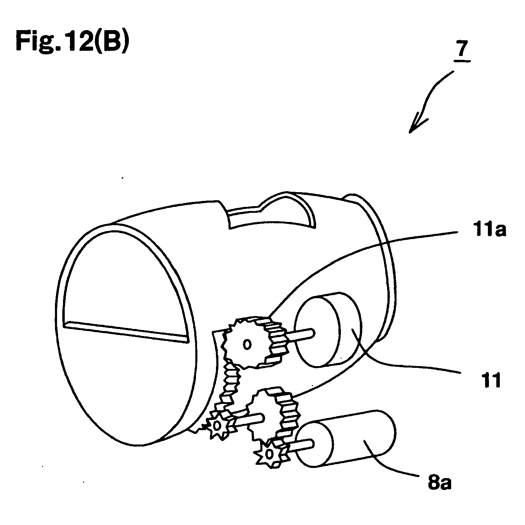

The control circuit 19 comprises a motor driving circuit 19a and a comparing circuit 19b. An output terminal of the motor driving circuit 19a is connected to the motor 8a. The motor driving circuit 19a is actuated based upon an input from the comparing circuit 19b. The comparing circuit 19b has an input terminal connected to an output terminal of the inclination sensor 12, and an input terminal connected to an output terminal of a potentiometer 11. The potentiometer 11 is attached to the movable part 7 by a wheel 11a which is in engagement with a gear of the movable part 7, as shown in Fig. 12 (B). The location on which the potentiometer 11 is attached to the movable part 7 can be basically any portion of the movable part 7. However, considering mass-production efficiency, it is preferable that the potentiometer 11 is located at an end portion of a gear of the movable part 7 which is also in engagement with a wheel mechanism connected to the motor 8a.

Signal processing in the comparing circuit 19b will now be described. The comparing circuit 19b functions to compare a terminal voltage of the potentiometer 11, i.e., a signal showing the inclination of the vehicle headlight 1, and a reference voltage, i.e., a voltage from the inclination sensor. When there is any difference therebetween, the comparing circuit 19b generates a driving signal for driving the motor 8a depending on the difference. The driving signal is directly outputted to the motor driving circuit 19a. Then, the motor 8a is actuated, and the movable part 7 is rotated around the center line Z of the vehicle headlight 1. When there is no difference between the output from the inclination sensor 12 and the output from the potentiometer 11, no driving signal is provided to the motor driving circuit 19a.

Second, the structure of the control circuit 19 will be described for the case in which the conditions to be referenced for driving the motor 8a includes, in addition to the output from the inclination sensor 12, the output from the velocity sensor 13 for detecting a running speed of the vehicle body, and a the output from the steering angle sensor 14 for detecting a steering angle of a handle bar or a steering wheel of the vehicle body 10 (the route indicated by dash-dot-lines). It is to be noted, that it is not necessary to include both the velocity sensor 13 and the steering angle sensor 14, but they may be included if required.

The control circuit 19 comprises a motor driving circuit 19a, a comparing circuit 19b, and a signal processing circuit 19c. The signal processing circuit 19c is arranged between the comparing circuit 19b and the motor driving circuit 19a. The comparing circuit 19b has an input terminal connected to an output terminal of the inclination sensor 12, and an input terminal connected to an output terminal of the potentiometer 11. An output terminal of the comparing circuit 19b is connected to an input terminal of the signal processing circuit 19c. The operation of the comparing circuit 19b is the same as described in the above, except that the driving signal generated as a result of the voltage comparison in the comparing circuit 19b is outputted to an input terminal of the signal processing circuit 19c. The motor driving circuit 19a has an input terminal connected to an output terminal of the signal processing circuit 19c, and an output terminal connected to the motor 8a. The motor driving circuit 19a actuates the motor 8a depending on the driving signal outputted from the signal processing circuit 19c.

Regarding the operation of the control circuit 19, the signal processing circuit 19c functions to appropriately adjust or compensate the inputted signal from the comparing circuit 19b. For example, when a velocity output from the velocity sensor 13 is smaller than 5 [km/h], i.e., when a driver is walking and is carrying a motorbike, even though there is any difference as a result of the comparison in the comparing circuit 19b, the motor driving circuit 19a will not be actuated. In another example, when the vehicle runs at a relatively low speed, a signal from the steering angle sensor 14 may be processed with priority, and the outputs from the comparing circuit 19b and the velocity sensor 13 may be used to adjust or correct the movable amount of the motor 8a calculated on the basis of the output from the steering angle sensor 14. And when the vehicle runs at a middle or high speed, the output from the comparing circuit 19b may be processed with priority to an output from the steering angle sensor 14.

In another modified example of the control circuit 19, although not shown, the velocity sensor 13 can be located at input sides of the inclination sensor 12 and the potentiometer 11. In this case, it is possible that the inclination sensor 12 and the potentiometer 11 are not actuated when the detected velocity is smaller than 5[km/h].

With regard to the sensors, Fig. 12(A) shows an example in which only the inclination sensor 12 is referenced, and another example in which the three kinds of sensors, i.e., the inclination sensor 12, the velocity sensor 13, the steering angle sensor 14, are referenced. The kinds and numbers of sensors are not limited thereto. Either one of the three sensors can be solely used, or either two of the three sensors can be used in combination. Alternatively, any other kind(s) of sensor (s) can be used solely or in combination with the above three kinds of sensors.

Operational advantages of the present invention will now be described. First, the vehicle headlight 1, and 20 can provide a light distribution pattern in which the horizontal line is kept parallel to the surface of the earth at any time of operation of the vehicle headlights 1 and 20. This advantage is emphasized when the vehicle headlights 1 and 20 are mounted on two-wheeled or three-wheeled vehicles, because inclination of the vehicle body is significant. Second, the structure of the vehicle light 1 and 20 in which the movable parts 7 are rotatably retained between the fixing member 9 and the second reflecting surface 6 enables a simple mechanism for driving the movable parts 7 of the vehicle light 1 and 20. The simple mechanism has its advantages in mass-production concerning efficiency and cost.

While there has been described what are at present considered to be preferred embodiments of the present invention, it will be understood that various modifications may be made thereto, and it is intended that the appended claims cover all such modifications as fall within scope of the invention.

## Claims

1. A vehicle headlight (1, 20) mounted on a vehicle body (10) which can lean to one side at the time of turning around, said vehicle headlight (1, 20) comprising:
a light source (3);
a projection lens (5);
a first ellipse group reflecting surface (4, 7a) having a movable part (7) provided as at least one portion thereof and being configured to rotate about an optical axis (Z) of the vehicle headlight (1, 20), said first ellipse group reflecting surface (4, 7a) having a first focus (f1) located at a position of the light source (3), the first ellipse group reflecting surface (7a) being configured such that light rays traveling from the first ellipse group reflecting surface (7a) are adjusted to enter in the projection lens (5),said movable part (7) having at least one opening part (7c);
a second ellipse group reflecting surface (6) corresponding to an area covering a moving range of the opening part (7c) formed in the movable part (7) of the first ellipse group reflecting surface (4, 7), said second ellipse group reflecting surface (6) having a first focus located at the light source (3), the second ellipse group reflecting surface (6) being configured such that light rays traveling from the second ellipse group reflecting surface (6) are adjusted to enter in the projection lens (5); a shutter (7b) being integrally formed with the movable part (7) and having an upper end; and a drive unit (8) connected with the movable part (7) of the first ellipse group reflecting surface (7), said drive unit (8) being actuatable for rotating said movable part (7) about said optical axis (Z) to thereby keep the upper end of the shutter (7b) to be horizontal as the vehicle (10) leans to one side.

2. The vehicle headlight (1, 20) of claim 1, wherein a shape of light distribution formed by light rays from the projection lens (5) is substantially a rectangle having a long side extending in a horizontal direction,
wherein, when the movable part (7) of the first ellipse group reflecting surface (4, 7a) is rotated by actuating the drive unit (8), the long side of the shape of the light distribution is kept in a horizontal position with respect to a surface of earth, and wherein
the first ellipse group reflecting surface (4, 7a) and the second ellipse group reflecting surface (6) are configured such that light rays passing through the opening part (7c) of the first ellipse group reflecting surface (7a) are reflected from at least a part of the second ellipse group reflecting surface (6), followed by being converged into a predetermined direction to illuminate an area ahead of the vehicle body (10).

3. The vehicle headlight (20) according to claim 1 or 2, wherein the movable part (7) constitutes the first ellipse group reflecting surface (7a).

4. The vehicle headlight (1) according to claim 1 or 2, wherein said fixed first ellipse group reflecting surface (4, 7a) comprises a fixed part (4) having a first focus (f1) located on a position of the light source (3), the fixed part (4) being configured such that light rays traveling from the fixed part (4) are adjusted to enter in the projection lens (5).

5. The vehicle headlight (1) according to claim 4, wherein said second ellipse group reflecting surface (6) is connected with the fixed part (4) of the first ellipse group reflecting surface (4, 7a).

6. The vehicle headlight (1, 20) of any of the preceding claims, further comprising a fixing member (9) arranged such that the movable part (7) of the first ellipse group reflecting surface (4, 7a) is interposed between the fixing member (9) and the second ellipse group reflecting surface (6), the fixing member (9) retaining the movable part (7) of the first ellipse group reflecting surface (4, 7a) in place.

7. The vehicle headlight (1) according to claim 5, further comprising a fixing member (9) arranged such that the movable part (7) of the first ellipse group reflecting surface (4, 7a) is interposed between the fixing member (9), and the fixed part (4) of the first ellipse group reflecting surface (4, 7a) and the second ellipse group reflecting surface (6), the fixing member (9) retaining the movable part (7) of the first ellipse group reflecting surface (4, 7a) in place.

8. The vehicle headlight (20) according to any of the preceding claims, wherein the at least one opening part comprises a pair of opening parts (7c) on a lateral side of the movable part (7) of the first ellipse group reflecting surface.

9. The vehicle headlight (1) according to any of the claims 1 to 7, wherein the at least one opening part (7c) is positioned upwardly.

10. The vehicle headlight (1, 20) according to any of the preceding claims, wherein the first ellipse group reflecting surface (4, 7a) and the second ellipse group reflecting surface (6) are configured such that the light rays passing through the opening part (7c) and reflected from the second ellipse group reflecting surface (6) illuminate a forward area in a traveling direction when the vehicle body (10) leans to one side.

11. The vehicle headlight (1, 20) according to any of the preceding claims, wherein a second focus (f2) of the second ellipse group reflecting surface (6) is located in the vicinity of a focus of the projection lens (5).

12. The vehicle headlight (1) according to any of claims 4 to 11, wherein the fixed part (4) of the first ellipse group reflecting surface (4, 7a) and a portion of the second ellipse group reflecting surface (6) for covering the opening part (7c) are connected through a stepped portion.

13. The vehicle headlight (1) according to any of claims 4 to 12, wherein the fixed part (4) and the movable part (7) of the first ellipse group reflecting surface (4, 7a) function as a continuous surface.

14. The vehicle headlight (1, 20) according to any of the preceding claims, wherein the first ellipse group reflecting surface (7a) is located inside the second ellipse group reflecting surface (6).

15. The vehicle headlight (1, 20) according to any of the preceding claims, wherein the drive unit (8) is adapted to rotate said movable part (7) based on an output of a sensor for detecting inclination of the vehicle body (10).

16. The vehicle headlight (1, 20) according to any of the preceding claims, wherein the drive unit (8) is adapted to rotate said movable part (7) based on an output of a sensor for detecting a running speed of the vehicle body (10).

17. The vehicle headlight (1, 20) according to any of the preceding claims, wherein the drive unit (8) is adapted to rotate said movable part (7) based on an output of a sensor for detecting a steering angle of a steering wheel or a handle bar.

18. The vehicle headlight (1, 20) according to any of the preceding claims, wherein the drive unit (8) comprises a motor (8a) and a gear mechanism (8b).

## Patentansprüche

1. Ein Fahrzeugfrontscheinwerfer (1, 20), der an einer Fahrzeugkarosserie (10) befestigt ist, der sich beim Wenden auf eine Seite neigen kann, wobei der genannte Fahrzeugfrontscheinwerfer (1, 20) folgendes aufweist:
eine Lichtquelle (3);
eine Projektionslinse (5);
eine erste aus einer Ellipsengruppe bestehende reflektierende Oberfläche (4, 7a), die ein bewegliches Bauteil (7) aufweist, das als zumindest ein Teil davon vorgesehen ist und gestaltet ist, um sich um eine optische Achse (Z) des Fahrzeugfrontscheinwerfers (1, 20) zu drehen, wobei die genannte erste aus einer Ellipsengruppe bestehende reflektierende Oberfläche (4, 7a) einen ersten Brennpunkt bzw. Fokus (f1) aufweist, der sich an einer Position der Lichtquelle (3) befindet, wobei die genannte erste aus einer Ellipsengruppe bestehende reflektierende Oberfläche (7a) derart gestaltet ist, dass Lichtstrahlen, die von der ersten aus einer Ellipsengruppe bestehenden reflektierenden Oberfläche (4, 7a) kommen, derart ausgerichtet werden, dass sie in die Projektionslinse (5) eintreten, wobei das genannte bewegliche Bauteil (7) zumindest einen Öffnungsteil (7c) aufweist;
eine zweite aus einer Ellipsengruppe bestehende reflektierende Oberfläche (6), die einem Bereich entspricht, der einen Bewegungsbereich des Öffnungsteils (7c) abdeckt, der in dem beweglichen Bauteil (7) der ersten aus einer Ellipsengruppe bestehende reflektierende Oberfläche (4, 7a) ausgeformt ist, wobei die genannte zweite aus einer Ellipsengruppe bestehende reflektierende Oberfläche (6) einen ersten Brennpunkt bzw. Fokus aufweist, der sich an der Position der Lichtquelle (3) befindet, wobei die genannte zweite aus einer Ellipsengruppe bestehende reflektierende Oberfläche (6) derart gestaltet ist, dass Lichtstrahlen, die von der zweiten aus einer Ellipsengruppe bestehenden reflektierenden Oberfläche (6) kommen, derart ausgerichtet werden, dass sie in die Projektionslinse (5) eintreten; eine Blende (shutter, 7b), die einteilig mit dem beweglichen Bauteil (7) ausgeformt ist und ein oberes Ende aufweist; und eine Antriebseinheit (8), die mit dem beweglichen Bauteil (7) der ersten aus einer Ellipsengruppe bestehenden reflektierenden Oberfläche (7) verbunden ist, wobei genannte Antriebseinheit (8) betätigt werden kann, um das genannte bewegliche Bauteil (7) um die genannte optische Achse (Z) zu rotieren, um **dadurch** das obere Ende der Blende (7b) in der Horizontalen zu halten, wenn sich das Fahrzeug (10) auf eine Seite neigt.

2. Der Fahrzeugfrontscheinwerfer (1, 20) gemäß Anspruch 1, wobei eine Form der Lichtverteilung, die durch Lichtstrahlen aus der Projektionslinse gebildet wird, im Wesentlichen ein Rechteck ist, welches eine lange Seite aufweist, die sich in horizontaler Richtung erstreckt,
wobei die lange Seite der Form der Lichtverteilung in der Horizontalen bezüglich der Bodenoberfläche gehalten wird, wenn das bewegliche Bauteil (7) der ersten aus einer Ellipsengruppe bestehenden reflektierenden Oberfläche (4, 7a) durch Betätigung der Antriebseinheit (8) rotiert wird, und wobei
die erste aus einer Ellipsengruppe bestehende reflektierende Oberfläche (4, 7a) und die zweite aus einer Ellipsengruppe bestehende reflektierende Oberfläche (6) derart gestaltet sind, dass solche Lichtstrahlen, die durch den Öffnungsteil (7c) der ersten aus einer Ellipsengruppe bestehenden reflektierenden Oberfläche (7a) hindurchtreten, von zumindest einem Teil der zweiten aus einer Ellipsengruppe bestehenden reflektierenden Oberfläche (6) reflektiert werden, und im Anschluss daran in eine vorherbestimmte Richtung konvergiert zu werden, um einen sich vor der Fahrzeugkarosserie (10) befindlichen Bereich zu beleuchten.

3. Der Fahrzeugfrontscheinwerfer (20) gemäß Anspruch 1 oder 2, wobei das bewegliche Bauteil (7) die erste aus einer Ellipsengruppe bestehende reflektierende Oberfläche (7a) bildet.

4. Der Fahrzeugfrontscheinwerfer (1) gemäß Anspruch 1 oder 2, wobei die genannte befestigte erste aus einer Ellipsengruppe bestehende reflektierende Oberfläche (4, 7a) ein befestigtes Bauteil (4) aufweist, welches einen ersten Brennpunkt (f1) besitzt, der sich an der Position der Lichtquelle (3) befindet, wobei das befestigte Bauteil (4) derart gestaltet ist, dass Lichtstrahlen, die von dem befestigten Bauteil (4) kommen, derart ausgerichtet werden, dass sie in die Projektionslinse (5) eintreten.

5. Der Fahrzeugfrontscheinwerfer (1) gemäß Anspruch 4, wobei die genannte zweite aus einer Ellipsengruppe bestehende reflektierende Oberfläche (6) mit dem befestigten Bauteil (4) der ersten aus einer Ellipsengruppe bestehenden reflektierenden Oberfläche (4, 7a) verbunden ist.

6. Der Fahrzeugfrontscheinwerfer (1, 20) gemäß einem der vorhergehenden Ansprüche, welcher zudem ein Befestigungsbauteil (9) aufweist, welches so angeordnet ist, dass sich das bewegliche Bauteil (7) der ersten aus einer Ellipsengruppe bestehenden reflektierenden Oberfläche (4, 7a) zwischen dem Befestigungsbauteil (9) und der zweiten aus einer Ellipsengruppe bestehenden reflektierenden Oberfläche (6) befindet, wobei das Befestigungsbauteil (9) das bewegliche Bauteil (7) der ersten aus einer Ellipsengruppe bestehenden reflektierenden Oberfläche (4, 7a) an Ort und Stelle hält.

7. Der Fahrzeugfrontscheinwerfer (1) gemäß Anspruch 5, welcher zudem ein Befestigungsbauteil (9) aufweist, welches so angeordnet ist, dass sich der bewegliche Teil (7) der ersten aus einer Ellipsengruppe bestehenden reflektierenden Oberfläche (4, 7a) zwischen dem Befestigungsbauteil (9) und dem befestigten Bauteil (4) der ersten aus einer Ellipsengruppe bestehenden reflektierenden Oberfläche (4, 7a) und der zweiten aus einer Ellipsengruppe bestehenden reflektierenden Oberfläche (6) befindet, wobei das Befestigungsbauteil (9) das bewegliche Bauteil (7) der ersten aus einer Ellipsengruppe bestehenden reflektierenden Oberfläche (4, 7a) an Ort und Stelle hält.

8. Der Fahrzeugfrontscheinwerfer (20) gemäß einem der vorhergehenden Ansprüche, wobei der mindestens eine Öffnungsteil ein Paar Öffnungsteile (7c) auf einer seitlichen Seite des beweglichen Bauteils (7) der ersten aus einer Ellipsengruppe bestehenden reflektierenden Oberfläche (4, 7a) aufweist.

9. Der Fahrzeugfrontscheinwerfer (1) gemäß einem der Ansprüche 1 bis 7, wobei der zumindest eine Öffnungsteil (7c) nach oben gerichtet vorgesehen ist.

10. Der Fahrzeugfrontscheinwerfer (1, 20) gemäß einem der vorhergehenden Ansprüche, wobei die erste aus einer Ellipsengruppe bestehende reflektierende Oberfläche (4, 7a) und die zweite aus einer Ellipsengruppe bestehende Oberfläche (6) derart gestaltet sind dass die durch den Öffnungsteil (7c) tretenden und von der zweiten aus einer Ellipsengruppe bestehenden reflektierenden Oberfläche (6) reflektierten Lichtstrahlen eine in Fahrtrichtung nach vorne gerichtete Fläche beleuchten, wenn sich die Fahrzeugkarosserie auf eine Seite neigt.

11. Der Fahrzeugfrontscheinwerfer (1, 20) gemäß einem der vorhergehenden Ansprüche, wobei sich ein zweiter Brennpunkt bzw. Fokus (f2) der zweiten aus einer Ellipsengruppe bestehenden reflektierenden Oberfläche (6) nahe einem Brennpunkt der Projektionslinse (5) befindet.

12. Der Fahrzeugfrontscheinwerfer (1) gemäß einem der Ansprüche 4 bis 11, wobei der befestigte Teil (4) der ersten aus einer Ellipsengruppe bestehenden reflektierenden Oberfläche (4, 7a) und ein Abschnitt der zweiten aus einer Ellipsengruppe bestehenden reflektierenden Oberfläche (6) zur Abdeckung des Öffnungsteils (7c) durch einen abgestuften Abschnitt verbunden sind.

13. Der Fahrzeugfrontscheinwerfer (1) gemäß einem der Ansprüche 4 bis 12, wobei der befestigte Teil (4) und der bewegliche Teil (7) der ersten aus einer Ellipsengruppe bestehenden reflektierenden Oberfläche (4, 7a) als eine fortlaufende Fläche wirken.

14. Der Fahrzeugfrontscheinwerfer (1, 20) gemäß einem der vorhergehenden Ansprüche, wobei die erste aus einer Ellipsengruppe bestehende reflektierende Oberfläche (7a) innerhalb der zweiten aus einer Ellipsengruppe bestehenden reflektierenden Oberfläche (6) angeordnet ist.

15. Der Fahrzeugfrontscheinwerfer (1, 20) gemäß einem der vorhergehenden Ansprüche, wobei die Antriebseinheit (8) angepasst ist, um den genannten beweglichen Teil (7) basierend auf dem Ausgabewert eines Sensors zur Detektion der Neigung der Fahrzeugkarosserie (10) zu rotieren.

16. Der Fahrzeugfrontscheinwerfer (1, 20) gemäß einem der vorhergehenden Ansprüche, wobei die Antriebseinheit (8) angepasst ist, um den genannten beweglichen Teil (7) basierend auf dem Ausgabewert eines Sensors zur Detektion der Fahrgeschwindigkeit der Fahrzeugkarosserie (10) zu rotieren,

17. Der Fahrzeugfrontscheinwerfer (1, 20) gemäß einem der vorhergehenden Ansprüche, wobei die Antriebseinheit (8) angepasst ist, um den genannten beweglichen Teil (7) basierend auf dem Ausgabewert eines Sensors zur Detektion des Lenkwinkels eines Lenkrads oder Lenkstange zu rotieren.

18. Der Fahrzeugfrontscheinwerfer (1, 20) gemäß einem der vorhergehenden Ansprüche, wobei die Antriebseinheit (8) einen Motor (8a) und einen Getriebemechanismus (8b) aufweist.

## Revendications

1. Phare de véhicule (1, 20) monté sur un corps de véhicule (10) qui peut s'incliner d'un côté au moment d'un virage, le phare de véhicule (1, 20) comprenant :
une source de lumière (3) ;
une lentille de projection (5) ;
une première surface réfléchissante du groupe elliptique (4, 7a) comportant une partie mobile (7) prévue sous forme d'au moins une partie de celle-ci, et agencée pour tourner autour d'un axe optique (Z) du phare de véhicule (1, 20), la première surface réfléchissante du groupe elliptique (4, 7a) ayant un premier foyer (f1) situé au niveau d'une position de la source de lumière (3), la première surface réfléchissante du groupe elliptique (7a) étant agencée de telle sorte que des rayons lumineux provenant de la première surface réfléchissante du groupe elliptique (7a) sont réglés pour entrer dans la lentille de projection (5), ladite partie mobile (7) ayant au moins une partie ouverte (7c) ;
une deuxième surface réfléchissante du groupe elliptique (6) correspondant à une zone couvrant une plage mobile de la partie ouverte (7c) formée dans la partie mobile (7) de la première surface réfléchissante du groupe elliptique (4, 7), la deuxième surface réfléchissante du groupe elliptique (6) ayant un premier foyer situé au niveau de la source de lumière (3), la deuxième surface réfléchissante du groupe elliptique (6) étant agencée de telle sorte que des rayons lumineux provenant de la deuxième surface réfléchissante du groupe elliptique (6) sont réglés pour entrer dans la lentille de projection (5) ; un volet obturateur (7b) étant formé d'une seule pièce avec la partie mobile (7) et ayant une extrémité supérieure ; et
une unité d'entraînement (8) connectée à la partie mobile (7) de la première surface réfléchissante du groupe elliptique (7), l'unité d'entraînement (8) étant actionnable pour faire tourner la partie mobile (7) autour de l'axe optique (Z) pour maintenir ainsi horizontale l'extrémité supérieure du volet obturateur (7b) lorsque le véhicule (10) s'incline d'un côté.

2. Phare de véhicule (1, 20) selon la revendication 1, dans lequel la forme de la distribution lumineuse formée par des rayons lumineux provenant de la lentille de projection (5) est sensiblement celle d'un rectangle ayant un grand côté s'étendant dans une direction horizontale,
dans lequel, lorsque la partie mobile (7) de la première surface réfléchissante du groupe elliptique (4, 7a) est tournée par l'actionnement de l'unité d'entraînement (8), le grand côté de la forme de la distribution lumineuse est maintenu dans une position horizontale par rapport à la surface du sol, et dans lequel
la première surface réfléchissante du groupe elliptique (4, 7a) et la deuxième surface réfléchissante du groupe elliptique (6) sont agencées de telle sorte que des rayons lumineux passant à travers la partie ouverte (7c) de la première surface réfléchissante du groupe elliptique (7a) sont réfléchis par au moins une partie de la deuxième surface réfléchissante du groupe elliptique (6), puis sont convergés dans une direction prédéterminée pour éclairer une zone en avant du corps de véhicule (10).

3. Phare de véhicule (20) selon la revendication 1 ou 2, dans lequel la partie mobile (7) constitue la première surface réfléchissante du groupe elliptique (7a).

4. Phare de véhicule (1) selon la revendication 1 ou 2, dans lequel la première surface réfléchissante du groupe elliptique (4, 7a) fixe comprend une partie fixe (4) ayant un premier foyer (f1) situé à une position de la source de lumière (3), la partie fixe (4) étant agencée de telle sorte que des rayons lumineux provenant de la partie fixe (4) sont réglés pour entrer dans la lentille de projection (5).

5. Phare de véhicule (1) selon la revendication 4, dans lequel la deuxième surface réfléchissante du groupe elliptique (6) est connectée à la partie fixe (4) de la première surface réfléchissante du groupe elliptique (4, 7a).

6. Phare de véhicule (1, 20) selon l'une quelconque des revendications précédentes, comprenant en outre un élément de fixation (9) agencé de telle sorte que la partie mobile (7) de la première surface réfléchissante du groupe elliptique (4, 7a) est intercalée entre l'élément de fixation (9) et la deuxième surface réfléchissante du groupe elliptique (6), l'élément de fixation (9) retenant en place la partie mobile (7) de la première surface réfléchissante du groupe elliptique (4, 7a).

7. Phare de véhicule (1) selon la revendication 5, comprenant en outre un élément de fixation (9) agencé de telle sorte que la partie mobile (7) de la première surface réfléchissante du groupe elliptique (4, 7a) est intercalée entre l'élément de fixation (9), la partie fixe (4) de la première surface réfléchissante du groupe elliptique (4, 7a) et la deuxième surface réfléchissante du groupe elliptique (6), l'élément de fixation (9) retenant en place la partie mobile (7) de la première surface réfléchissante du groupe elliptique (4, 7a).

8. Phare de véhicule (20) selon l'une quelconque des revendications précédentes, dans lequel ladite au moins une partie ouverte comprend deux parties ouvertes (7c) sur un côté latéral de la partie mobile (7) de la première surface réfléchissante du groupe elliptique.

9. Phare de véhicule (1) selon l'une quelconque des revendications 1 à 7, dans lequel ladite au moins une partie ouverte (7c) est positionnée orientée vers le haut.

10. Phare de véhicule (1, 20) selon l'une quelconque des revendications précédentes, dans lequel la première surface réfléchissante du groupe elliptique (4, 7a) et la deuxième surface réfléchissante du groupe elliptique (6) sont agencées de telle sorte que les rayons lumineux passant à travers la partie ouverte (7c) et réfléchis par la deuxième surface réfléchissante du groupe elliptique (6) éclairent une zone vers l'avant dans la direction de déplacement lorsque le corps de véhicule (10) s'incline d'un côté.

11. Phare de véhicule (1, 20) selon l'une quelconque des revendications précédentes, dans lequel un deuxième foyer (f2) de la deuxième surface réfléchissante du groupe elliptique (6) est situé au voisinage d'un foyer de la lentille de projection (5).

12. Phare de véhicule (1) selon l'une quelconque des revendications 4 à 11, dans lequel la partie fixe (4) de la première surface réfléchissante du groupe elliptique (4, 7a) et une partie de la deuxième surface réfléchissante du groupe elliptique (6) destinée à couvrir la partie ouverte (7c) sont connectées par l'intermédiaire d'une partie en échelon.

13. Phare de véhicule (1) selon l'une quelconque des revendications 4 à 12, dans lequel la partie fixe (4) et la partie mobile (7) de la première surface réfléchissante du groupe elliptique (4, 7a) fonctionnent comme une surface continue.

14. Phare de véhicule (1, 20) selon l'une quelconque des revendications précédentes, dans lequel la première surface réfléchissante du groupe elliptique (7a) est située à l'intérieur de la deuxième surface réfléchissante du groupe elliptique (6).

15. Phare de véhicule (1, 20) selon l'une quelconque des revendications précédentes, dans lequel l'unité d'entraînement (8) est apte à faire tourner la partie mobile (7) en fonction d'une information de sortie d'un capteur destiné à détecter l'inclinaison du corps de véhicule (10).

16. Phare de véhicule (1, 20) selon l'une quelconque des revendications précédentes, dans lequel l'unité d'entraînement (8) est apte à faire tourner la partie mobile (7) en fonction d'une information de sortie d'un capteur destiné à détecter la vitesse de déplacement du corps de véhicule (10).

17. Phare de véhicule (1, 20) selon l'une quelconque des revendications précédentes, dans lequel l'unité d'entraînement (8) est apte à faire tourner la partie mobile (7) en fonction d'une information de sortie d'un capteur destiné à détecter un angle de braquage d'un volant ou d'un guidon.

18. Phare de véhicule (1, 20) selon l'une quelconque des revendications précédentes, dans lequel l'unité d'entraînement (8) comprend un moteur (8a) et un mécanisme d'engrenage (8b).
